Europäisches Patentamt

European Patent Office

Office européen des brevets

(19)

(11) Veröffentlichungsnummer: **0 252 259 B1**

# (12) EUROPÄISCHE PATENTSCHRIFT

(45) Veröffentlichungstag der Patentschrift: **09.12.92**

(51) Int. Cl.5: **H04M 19/06**, H04M 19/08

(21) Anmeldenummer: **87107340.9**

(22) Anmeldetag: **20.05.87**

(54) **Einrichtung zur Speisung eines in einem Fernsprechsystem teilnehmerseitig angeordneten Gerätes.**

(30) Priorität: **10.07.86 DE 3623212**

(43) Veröffentlichungstag der Anmeldung:
**13.01.88 Patentblatt 88/02**

(45) Bekanntmachung des Hinweises auf die Patenterteilung:
**09.12.92 Patentblatt 92/50**

(84) Benannte Vertragsstaaten:
**AT BE CH DE FR GB IT LI SE**

(56) Entgegenhaltungen:
**DE-A- 3 427 139**
**DE-A- 3 434 853**
**DE-A- 3 538 698**

(73) Patentinhaber: **Alcatel SEL Aktiengesellschaft**
**Lorenzstrasse 10**
**W-7000 Stuttgart 40(DE)**
(84) Benannte Vertragsstaaten:
**CH DE FR GB IT LI AT**

(73) Patentinhaber: **ALCATEL N.V.**
**Strawinskylaan 537 (World Trade Center)**
**NL-1077 XX Amsterdam(NL)**
(84) Benannte Vertragsstaaten:
**BE SE**

(72) Erfinder: **Breitenbach, Horst**
**Hegnachstrasse 17a**
**W-7000 Stuttgart 61(DE)**
Erfinder: **Wiegel, Manfred**
**Sandbuckel 25B**
**W-7000 Stuttgart 31(DE)**
Erfinder: **Ryschka, Manfred**
**Marsstrasse 12**
**W-7141 Benningen(DE)**

(74) Vertreter: **Gähr, Hans-Dieter, Dipl.-Ing. (FH) et al**
**Alcatel SEL AG Patent- und Lizenzwesen**
**Postfach 30 09 29**
**W-7000 Stuttgart 30(DE)**

**Beschreibung**

Die Erfindung betrifft eine Einrichtung gemäß dem Oberbegriff des Patentanspruchs 1.

Über Fernsprechleitungen lassen sich neben Sprachsignalen gleichzeitig Daten übertragen. Damit Sprechbetrieb und Datenübertragung einander nicht stören, erfolgt die Datenübertragung dabei zweckmäßig in Frequenzbereichen, die zur Sprachübertragung nicht genutzt werden, in denen jedoch die Leitungsdämpfung noch gering genug ist, um ohne zusätzlichen Verstärkeraufwand Daten übertragen zu können. So wird beispielsweise bei einem von der Deutschen Bundespost demnächst unter der Bezeichnung "TEMEX" angebotenen Dienst Fernwirkinformation zwischen teilnehmerseitigen Fernwirkendeinrichtungen und besonderen Leitstellen über für den Fernsprechbetrieb genutzte Teilnehmeranschlußleitungen übertragen. Es wird hierzu eine Frequenz von etwa 40 kHz benutzt, die über Bandpaßfilter in die Teilnehmer-Anschlußleitung eingespeist und mit Hilfe von Sperrfiltern vom Teilnehmerapparat und von der Vermittlungseinrichtung ferngehalten wird.

Eine Beschreibung eines von vier von der DBP zu Betriebsversuchen eingesetzten Prototypen des TEMEX-Systems ist dem Tagungsband der Ausstellung "Telematica" zu entnehmen, die vom 11. bis 14.06.1986 in Stuttgart stattfand.

Da ein teilnehmerseitiges datenverarbeitendes Gerät, wie z.B. eine Fernwirk-Unterstelle aktive Bauelemente enthält, ist eine Speisung erforderlich. Diese kann z.B. über das öffentliche Stromnetz erfolgen. Es muß dann am Ort der Unterstelle ein Netzanschluß vorhanden sein. Weiterhin muß sichergestellt sein, daß Netzausfälle nicht zum Ausfall der Fernwirk-Unterstelle führen. Dies setzt aber eine Notstromversorgung voraus. Sollen Netzanschluß und Notstromversorgung vermieden werden, so kommt eine Speisung der Fernwirk-Unterstelle über die Teilnehmeranschlußleitung in Frage. Eine solche Speisung ist von großem Vorteil, jedoch muß sichergestellt werden, daß diese Speisung einerseits weder den Fernsprechbetrieb noch die Datenübertragung stört und andererseits nicht selbst durch die im Fernsprechbetrieb auftretenden Schleifenunterbrechungen (Wählen) oder die Rufstromaufschaltung gestört wird.

Es ist Aufgabe der Erfindung, eine Einrichtung der eingangs genannten Art anzugeben, die eine solche Speisung eines teilnehmerseitig angeordneten datenverarbeitenden Gerätes über die Teilnehmer-Anschlußleitung mit möglichst geringem Aufwand gestattet.

Diese Aufgabe wird durch die im kennzeichnenden Teil des Patentanspruchs 1 angegebenen Merkmale gelöst.

Durch die Speisung des datenverarbeitenden Gerätes über eine Konstantstromsenke wird ein vom momentanen Stromverbrauch des Gerätes unabhängiger Stromfluß auf der Teilnehmeranschlußleitung erreicht. Zusätzlich wird durch Vorschalten eines Strombegrenzers vor den Teilnehmerapparat ein niederohmiger Schleifenschluß verhindert, so daß auch bei geschlossenem nsa-Kontakt die Versorgung des datenverarbeitenden Gerätes gesichert bleibt und sich der Schleifenschluß nur durch eine Stromzunahme definierter Größe, von einem durch die Konstantstromsenke festgelegten Grundwert aus gemessen, auf der Teilnehmeranschlußleitung bemerkbar macht. Die durch Schleifenschluß im Teilnehmerapparat hervorgerufenen Stromänderungen lassen sich amtsseitig recht einfach feststellen und in die in der Vermittlungseinrichtung benötigten Wählimpulse umsetzen. Durch den für Wechselstrom wirksamen Kurzschluß des Strombegrenzers bleibt dieser sowohl auf den Rufstrom (25 Hz) wie auch auf die Sprechströme ohne Einfluß.

Ausgestaltungen der Erfindung sind in den Unteransprüchen angegeben. So sieht z.B. eine im Anspruch 2 angegebene Ausgestaltung Trennschaltmittel vor, die sowohl auf der Teilnehmerseite als auch auf der Amtsseite alle der Speisung des datenverarbeitenden Gerätes dienenden Schaltungsteile von den zum Fernsprechbetrieb notwendigen Schaltungsteilen abtrennen und es damit möglich machen, z.B. im Störungsfall, die Datenübertragung abzuschalten und so eine mögliche Beeinträchtigung des Fernsprechbetriebes sicher zu vermeiden.

Gegenstand der Ansprüche 3 und 4 sind Ausgestaltungen der amtsseitig bzw. teilnehmerseitig vorhandenen Schaltmittel zur Abschaltung der der Datenübertragung dienenden Schaltungsteile und zur direkten Durchschaltung der Telefonverbindung.

Eine im Anspruch 5 beschriebene Ausgestaltung der Erfindung ermöglicht eine von der Amtsbatterie unabhängige Speisung des datenverarbeitenden Gerätes, während schließlich eine in Anspruch 6 beschriebene Weiterbildung der Erfindung die Weiterschaltung des Rufstromes zum Teilnehmer auch bei von der Amtsbatterie unabhängiger Speisung sicherstellt.

Anhand eines Blockschaltbildes (Fig.) soll nun die Einrichtung nach der Erfindung ausführlich beschrieben und ihre Funktion erklärt werden.

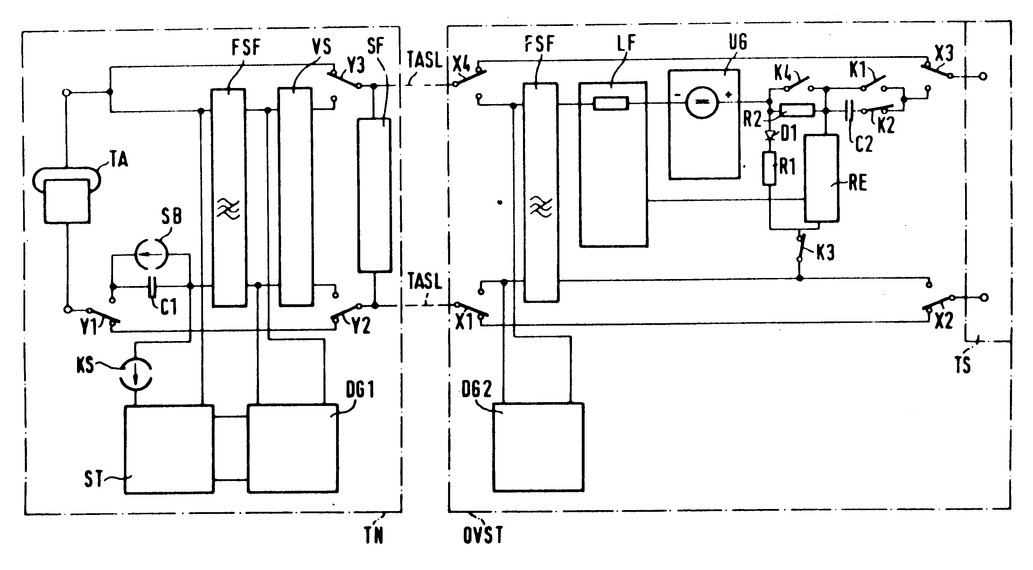

In der Figur sind links der teilnehmerseitige Bereich TN und rechts der amtsseitige Bereich OVST einer Telefonverbindung dargestellt, deren Teilnehmeranschlußleitung TASL zur Übertragung von Daten mitbenutzt wird. Sowohl im teilnehmerseitigen Bereich TN als auch im amtsseitigen Bereich OVST befinden sich datenverarbeitende Geräte DG1 und DG2, welche an die Teilnehmeranschlußleitung angeschlossen sind und Daten miteinander austauschen. Es kann sich bei dem im teilnehmerseitigen Bereich befindlichen datenverarbeitenden Gerät z.B. um eine Fernwirk-Endeinrichtung handeln, eine intelligente Fernwirk-Unterstation, die einerseits Meldungen von einer Anzahl von Sensoren empfängt und über die Teilnehmeranschlußleitung TASL weitergibt und andererseits eine Anzahl von Aktoren steuert und Kommandos hierzu über die Teilnehmeranschlußleitung empfängt. Das amtsseitig angeordnete datenverarbeitende Gerät DG2 wäre in diesem Falle die der teilnehmerseitigen Fernwirk-Unterstation übergeordnete Zentrale oder Hauptzentrale.

Um Störungen des Fernsprechbetriebes durch die Datenübertragung zu vermeiden, sind sowohl teilnehmerseitig als auch amtsseitig Sperrfilter FSF vorgesehen, die für die Datenübertragung verwendete Frequenzen einerseits vom Teilnehmerapparat TA, andererseits von der Teilnehmerschaltung TS in der Vermittlungseinrichtung fernhalten. Die datenverarbeitenden Geräte DG1 und DG2 enthalten ihrerseits zur Teilnehmeranschlußleitung hin Bandpaßfilter, die für die im Fernsprechbetrieb benutzten Frequenzen undurchlässig sind.

Während die Speisung der amtsseitigen Einrichtungen einschließlich des datenverarbeitenden Gerätes DG 2 aus der gegen Ausfall gesicherten Amtsbatterie problemlos, z.B. mittels eines DC/DC-Wandlers erfolgen kann und in der Figur nicht dargestellt ist, wird das teilnehmerseitige datenverarbeitende Gerät DG1 über die Teilnehmeranschlußleitung aus einer amtsseitigen zusätzlichen Gleichstromquelle UG gespeist. Hierzu sind teilnehmerseitig neben einem Verpolschutz VS eine Konstantstromsenke KS mit einer nachgeschalteten Stabilisatorschaltung ST, eine durch einen Kondensator C1 überbrückte Strombegrenzungsschaltung SB und eine Spannungsfühlerschaltung SF vorgesehen. Letztere steuert ein Trennrelais mit drei Umschaltkontakten Y1, Y2 und Y3 an.

Amtsseitig sind neben der zusätzlichen Gleichspannungsquelle UG, eine Leitungsfühlerschaltung LF, eine Ruferkennungsschaltung RE und ein durch die Leitungsfühlerschaltung angesteuertes Trennrelais mit Kontakten X1 ... X4 vorgesehen. Weitere Relaiskontakte K1 ... K4 dienen der Wahlwiederholung, der Rufweiterschaltung und der Durchschaltung eines über eine Diode D1 und einen Widerstand R1 gebildeten Parallelstrompfades, der eine Speisung der teilnehmerseitigen Einrichtungen aus der zusätzlichen Gleichspannungsquelle auch dann ermöglicht, wenn die über die Adern a und b zur Teilnehmerschaltung TS führende Verbindung unterbrochen wird.

Die Funktion der dargestellten Einrichtung ist wie folgt:
Im Ruhezustand sind sämtliche, für die Datenübertragung benötigten Einrichtungen von der Teilnehmerschleife abgetrennt. Die Kontakte Y1 ... Y3 und X1 ... X4 befinden sich in der in der Figur dargestellten Stellung. Der Schleifenstrom wird von der Amtsbatterie über die a- und b-Adern der Teilnehmerschaltung, die Teilnehmeranschlußleitung und den Teilnehmerapparat TA geführt.

Soll die Datenübertragung aufgenommen werden, so werden zunächst die amtsseitig angeordneten, für die Datenübertragung notwendigen Schaltungsteile mit Strom versorgt. Dies hat die Umschaltung der Kontakte X1 ... X4 zur Folge und damit die Anschaltung der zusätzlichen Gleichstromquelle UG an die Teilnehmeranschlußleitung. Die hierdurch bewirkte Spannungsänderung (die Spannung der Gleichspannungsquelle UG kann z.B. höher als die der Amtsbatterie sein) veranlaßt die Spannungsfühlerschaltung SF auf der Teilnehmerseite zur Umschaltung der Kontakte Y1 ... Y3. Damit werden auch die teilnehmerseitigen, zur Datenübertragung erforderlichen Schaltungsteile in die Teilnehmerleitung eingeschleift und es fließt ein konstanter Strom über die Konstantstromsenke KS und die Stabilisierungsschaltung ST, aus der das datenverarbeitende Gerät DG1 mit konstanter Spannung gespeist wird. Der Strom durch die Konstantstromsenke ist höher als der maximal vom datenverarbeitenden Gerät benötigte Betriebsstrom, so daß durch den Datenaustausch bedingte Änderungen der Stromaufnahme des datenverarbeitenden Gerätes keine Stromänderungen der Konstantstromsenke bewirken. Auch Spannungsänderungen auf der Teilnehmeranschlußleitung ändern den Strom in die Konstantstromsenke nicht.

Jetzt kann die Datenübertragung in beiden Richtungen erfolgen.

Wird während der Datenübertragung der Teilnehmer gerufen, so wird hierzu ein Rufstromsignal (Wechselstrom 25 Hz) in die a- und b-Adern der Teilnehmerschaltung TS eingespeist. Der Rufstrom gelangt über den umgeschalteten Kontakt X3, den Kontakt K2 und den Kondensator C2 in die Ruferkennungsschaltung RE. Diese generiert ein Steuersignal, welches potentialfrei an die Leitungsfühlerschaltung LF gelangt und dort das Schließen des Kontaktes K4 veranlaßt. Der Rufstrom kann jetzt über den Kontakt K4 zum Teilnehmerapparat TA fließen. (Der zum Kontakt K4 parallel liegende Widerstand R2 ist hochohmig und hat nur Entladungsfunktion, er kann keinen nennenswerten Rufstromanteil führen).

Die zusätzliche Gleichspannungsquelle UG sowie die Leitungsfühlerschaltung LF und das Sperrfilter FSF sind für den Rufstrom niederohmig.

Auf der Teilnehmerseite fließt der Rufstrom über den Teilnehmerapparat und den Kondensator C1. Die Spannungsfühlerschaltung SF, die Konstantstromsenke KS und die den Verpolungsschutz bewerkstelligende Schaltung VS reagieren wie auch die datenverarbeitenden Geräte auf beiden Seiten nicht auf Wechselstrom der Rufstromfrequenz.

Hebt der Teilnehmer ab, so wird die Teilnehmerschleife durch den Gabelumschalter im Teilnehmerapparat geschlossen. Jetzt fließt zusätzlich ein konstanter Gleichstrom über die Strombegrenzungsschaltung SB, die so ausgelegt ist, daß auch bei niedrigster vorkommender Spannung an den Adern der Teilnehmeranschlußleitung noch der Grenzstrom fließt. Damit erhöht sich der über die Teilnehmer-Anschlußleitung fließende Gesamtstrom um den durch die Strombegrenzerschaltung vorgegebenen Betrag. Diese Stromerhöhung bemerkt die amtsseitig angeordnete Leitungsfühlerschaltung LF, schaltet die Kontakte K1, K2 und K3 um und stellt damit eine niederohmige Verbindung zur Teilnehmerschaltung TS her.

Die Rufstromerkennungsschaltung RE ist, wie auch der über die Diode D1 und den Widerstand R1 führende Strompfad, durch den Kontakt K3 nach dessen Umschaltung von der b-Ader der Teilnehmerschaltung abgetrennt, so daß eine Dämpfung des Sprechstromes durch diese Schaltungsteile ausgeschlossen ist. Der Schleifen-Gleichstrom, der bisher über die Diode D1 und den Widerstand R1 geflossen ist, fließt jetzt über die Teilnehmerschaltung TS und die Amtsbatterie.

Will der Teilnehmer selbst telefonieren, so hebt er zunächst den Handapparat seines Teilnehmerapparates ab und wählt dann die Nummer eines gewünschten Gesprächspartners. Die Wählimpulse stellen kurze Unterbrechungen des über den Teilnehmerapparat fließenden Stromes dar. Amtsseitig machen sich diese durch entsprechend kurzzeitige Stromabsenkungen um den Betrag des Grenzstromes der Strombegrenzerschaltung SB bemerkbar. Die Leitungsfühlerschaltung LF ist nun mit einem schnellen Impulsdetektor ausgestattet, der diese Stromabsenkungen als Wählimpulse erkennt und sie durch synchrones Öffnen des Kontaktes K4 in die von der Vermittlungseinrichtung verwertbaren Schleifenstromunterbrechungen umsetzt. Die Speisestromversorgung der für die Datenübertragung notwendigen teilnehmerseitigen Schaltungen kann während der kurzzeitigen Schleifenstromunterbrechungen entweder durch parallel liegende Kapazitäten oder durch ein mit dem Öffnen des Kontaktes K4 synchrones Schließen des Kontaktes K3 aufrechterhalten werden. Ist die Verbindung zustande gekommen, fließt der Sprechstrom auf der Teilnehmerseite wie der Rufstrom über den Kondensator C1.

Ein Ausfall der zusätzlichen Gleichstromquelle UG führt automatisch zum Rückfall der Kontakte Y1 ... Y3 und X1 ... X4 und damit zur Abtrennung aller zur Datenübertragung verwendeten Einrichtungen von der Teilnehmerschleife. Andere Fehler, die sich in einem Ausfall der Datenübertragung oder einer fehlerhaften Datenübertragung bemerkbar machen, führen zu einer gezielten Abschaltung der Gleichstromquelle durch eine den datenverarbeitenden Geräten übergeordnete Stelle, z.B. eine Fernwirkzentrale.

Anstelle der in der Figur dargestellten Kontakte können selbstverständlich auch äquivalente elektronische Schaltbauelemente verwendet werden.

**Patentansprüche**

1. Einrichtung zur Speisung eines in einem Fernsprechsystem teilnehmerseitig angeordneten, datenverarbeitenden Gerätes, insbesondere einer Fernwirk-Unterstation, welches unabhängig vom Fernsprechbetrieb, in einem für den Fernsprechbetrieb nicht benutzten Frequenzbereich mittels geeigneter Sende- und Empfangseinrichtungen Daten über die Teilnehmer-Anschlußleitung empfängt oder ausgibt, **dadurch gekennzeichnet**, daß teilnehmerseitig ein für Wechselstrom kurzgeschlossener Strombegrenzer (SB) mit dem Teilnehmerapparat (TA) in Reihe liegt und dieser Reihenschaltung eine für Wechselstrom gesperrte Konstantstromsenke (KS) parallel geschaltet ist, deren Strom das datenverarbeitende Gerät (DG) speist und dessen wechselnden Stromverbrauch zumindest deckt, daß amtsseitig eine zusätzliche Gleichstromquelle (UG) sowie eine Leitungsfühlerschaltung (LF) in die zum Teilnehmer führende Leitung geschleift sind, wobei die Leitungsfühlerschaltung die durch Schaltvorgänge im Teilnehmerapparat bewirkten Stromänderungen auf der zum Teilnehmer führenden Leitung erkennt und zu Steuerimpulsen für einen Wählimpulsweitergabeschalter (K4) umsetzt.

2. Einrichtung nach Anspruch 1, dadurch gekennzeichnet, daß sowohl auf der Teilnehmerseite als auch amtsseitig Trennschaltmittel (Y1 ... Y3, X1 ... X4) vorgesehen sind, die abhängig von den Betriebszustand der Speiseeinrichtung kennzeichnenden Strom- und oder Spannungswerten das datenverarbeitende Gerät (DG1) wie auch die zur Speisung des datenverarbeitenden Gerätes dienenden Schaltungsteile (KS, ST, UG) von den zum Fernsprechbetrieb notwendigen Schaltungsteilen (TA, TASL, TS) abtrennen.

3. Einrichtung nach Anspruch 2, dadurch gekennzeichnet, daß die amtsseitigen Trennschaltmittel (X1 ... X4) die amtsseitigen, der Speisung des datenverarbeitenden Gerätes dienenden Einrichtungen (UG) sowohl von der zum Teilnehmer führenden Teilnehmeranschlußleitung (TASL) als auch von der Teilnehmerschaltung (TS) der Fernsprechvermittlung trennen und eine direkte Verbindung zwischen Teilnehmerschaltung und Teilnehmeranschlußleitung (TASL) herstellen, und daß die amtsseitigen Trennschaltmittel hierzu von der Leitungsfühlerschaltung (LF) bei Unterschreiten eines vorgegebenen Stromwertes auf der zum Teilnehmer führenden Leitung angesteuert werden.

4. Einrichtung nach Anspruch 2 oder 3, dadurch gekennzeichnet, daß die teilnehmerseitigen Trennschaltmittel (Y1 ... Y3) das datenverarbeitende Gerät (DG1), den Strombegrenzer (SB) und die teilnehmerseitigen, der Speisung des datenverarbeitenden Gerätes dienenden Schaltungsteile (KS, ST) von der Teilnehmeranschlußleitung (TASL) und vom Teilnehmerapparat (TA) abtrennen und den Teilnehmerapparat mit der Teilnehmeranschlußleitung verbinden, und daß die teilnehmerseitigen Trennschaltmittel hierzu von einer Spannungsfühlerschaltung (SF) bei Absinken der Spannung auf der Teilnehmeranschlußleitung unter einen vorgegebenen Wert angesteuert werden.

5. Einrichtung nach einem der vorstehenden Ansprüche, dadurch gekennzeichnet, daß amtsseitig parallel zur Teilnehmerschaltung ein Strompfad (D1, R1, K3) schaltbar ist, der eine Stromversorgung des datenverarbeitenden Gerätes (DG1) von der zusätzlichen Gleichspannungsquelle (UG) aus unabhängig von einem Schleifenschluß über die Telnehmerschaltung (TS) ermöglicht.

6. Einrichtung nach Anspruch 5, dadurch gekennzeichnet, daß amtsseitig ein weiteres Trennschaltmittel (K1) vorgesehen ist, das den Strompfad über die Teilnehmerschaltung (TS) unterbricht, so lange der über den Teilnehmerapparat (TA) führende Strompfad unterbrochen ist und daß amtsseitig eine Ruferkennungsschaltung (RE) vorgesehen ist, die ein ankommendes Rufsignal erkennt und, davon abhängig, diese Unterbrechung aufhebt und damit die Durchschaltung des Rufstromes zur Teilnehmerschaltung bewirkt.

## Claims

1. Arrangement for supplying power to a data processing device located at the subscriber's end in a telephone system, particularly to a remote telecontrol station, which, independently of telephone operation, receives or sends out data over the subscriber line by means of suitable transmitting and receiving devices in a frequency range not used for telephone operation, **characterized in** that at the subscriber's end, a current limiter (SB) short-circuited for alternating current is connected in series with the subscriber's set (TA), that this series combination is shunted by a constant-current sink (KS) which is blocked for alternating current and whose current feeds, and at least covers the changing power requirements of, the data processing device (DG1), and that at the central-office end, an additional direct-current source (UG) and a line-current-sensing circuit (LF) are inserted in the subscriber line, the line-current-sensing circuit detecting the changes in current caused on the subscriber line by switching operations in the subscriber's set and converting said changes in current into control pulses for a dial pulse transfer switch (K4).

2. An arrangement as claimed in claim 1, characterized in that both at the subscriber's end and at the central-office end, disconnecting means (Y1...Y3, X1...X4) are provided which, depending on current and/or voltage values indicative of the condition of the arrangement, disconnect the data processing device (DG1, DG2) and the subcircuits (KS, ST, UG) serving to supply power to the data processing device from the subcircuits (TA, TASL, TS) necessary for telephone operation.

3. An arrangement as claimed in claim 2, characterized in that the disconnecting means (X1...X4) at the central-office end disconnect the subcircuits (UG) serving to supply power to the data processing device both from the subscriber line (TASL) and from the line circuit (TS) of the central office and establish a direct connection between the line circuit and the subscriber line (TASL), and that to this end, the disconnecting means at the central-office end are operated by the line sensor circuit (LF) when the current value on the subscriber line falls below a predetermined value.

4. An arrangement as claimed in claim 2 or 3, characterized in that the disconnecting means (Y1...Y3) at the subscriber's end disconnect the data processing device (DG1), the current limiter (SB), and the subcircuits (KS, ST) at the subscriber's end for supplying power to the data processing device from the subscriber line (TASL) and from the subscriber's set (TA), and connect the subscriber's set to the subscriber line, and that to this end, the disconnecting means at the subscriber's end are operated by a voltage-sensing circuit (SF) when the voltage on the subscriber line drops below a predetermined value.

5. An arrangement as claimed in any one of the preceding claims, characterized in that at the central-office end, a current path (D1, R2, K3) can be placed in parallel with the line circuit (TS), said current path permitting power to be supplied to the data processing device (DG1) from the additional direct-current source (UG) independently of any loop closure via the line circuit (TS).

6. An arrangement as claimed in claim 5, characterized in that at the central-office end, an additional disconnecting means (K1) is provided which interrupts the current path through the line circuit (TS) as long as the current path through the subscriber's set (TA) is interrupted, and that at the central-office end, a ringing-signal-detecting circuit (RE) is provided which detects an incoming ringing signal and cancels said interruption in response thereto, thus causing the ringing current to be applied to the line circuit.

**Revendications**

1. Dispositif pour l'alimentation électrique d'un appareil de traitement de données dans un système de téléphone, en particulier une sous-station de téléaction, disposé du côté de l'abonné dans un système de télécommunication, ledit appareil recevant ou émettant des données via la ligne de raccordement d'abonné indépendamment des échanges téléphoniques, dans une zone de fréquence qui n'est pas utilisée pour le fonctionnement téléphonique au moyen de dispositifs adéquats de transmission et de réception, caractérisé en ce que, du côté de l'abonné, un limitateur de courant (SB), court-circuité pour des courants alternatifs, est disposé en série avec le poste d'abonné (TA), ce circuit série étant connecté en parallèle avec un absorbeur de courant continu (KS) qui est bloqué par les courants alternatifs et dont le courant alimente le dispositif de traitement de données (DG) en fournissant au moins le courant alternatif consommé par ce dernier, en ce que, du côté de l'autocommutateur, une source supplémentaire (UG) de courant continu ainsi qu'un circuit de détection de courant de ligne (LF) sont raccordés dans la boucle de la ligne de raccordement d'abonné, le circuit de détection de courant de ligne reconnaissant les changements de courant réalisés par des processus de commutation dans le poste d'abonné sur la ligne de raccordement d'abonné en les transformant en impulsions pour un commutateur (K4) susceptible de propager les impulsions de numérotation dans l'autocommutateur.

2. Dispositif selon la revendication 1, caractérisé en ce que du côté de l'abonné ainsi que du côté de l'autocommutateur, des moyens de commutation d'isolation (Y1 ... Y3, X1 ... X4) sont prévus qui, selon les valeurs de courant et/ou de tension caractérisant l'état de fonctionnement du circuit d'alimentation, réalisent l'isolation du dispositif de traitement de données (DG1) ainsi que les éléments de circuit (KS, ST, UG) qui servent à alimenter le dispositif de traitement de données, des composants de circuit (TA, TASL, TS) nécessaires à l'exploitation téléphonique.

3. Dispositif selon la revendication 2, caractérisé en ce que les moyens d'isolation (X1 ... X4) du côté de l'autocommutateur réalisent la séparation du dispositif (UG) servant à alimenter électriquement le dispositif de traitement de données d'une part de la ligne de raccordement d'abonné (TASL) menant à l'abonné et, d'autre part, du joncteur d'abonné (TS) de l'autocommutateur, et réalise un raccordement direct entre le joncteur d'abonné et la ligne de raccordement d'abonné (TASL), et en ce que les moyens d'isolation disposés du côté de l'autocommutateur sont commandés à cette fin au moyen du circuit de détection du courant de ligne (LF) suite à un abaissement du courant dans la ligne menant à l'abonné à une valeur inférieure à une valeur prédéterminée.

4. Dispositif selon la revendication 2 ou 3, caractérisé en ce que les moyens de séparation disposés du côté de l'abonné (Y1 ... Y3) réalisent la séparation du dispositif de traitement de données (DG1), du limitateur de courant (SB) et des éléments de circuit (KS, ST) servant à alimenter le dispositif de traitement de données, de la ligne de raccordement de l'abonné (TASL) et du poste d'abonné (TA), en réalisant le raccordement entre le poste d'abonné et la ligne de raccordement d'abonné, et en ce que les moyens de séparation disposés du côté de l'abonné sont commandés, pour cette fin, par un circuit de détection de tension (SF) lors de l'abaissement de la tension sur la ligne de raccordement d'abonné en-dessous d'une valeur prédéterminée.

5. Dispositif selon l'une quelconque des revendications précédentes, caractérisé en ce qu'un chemin de courant (D1, R1, K3) peut être établi en parallèle avec le joncteur d'abonné, du côté de l'autocommutateur, assurant ainsi l'alimentation en courant électrique du dispositif de traitement de données (DG1) à partir de la source supplémentaire (UG) de courant continu indépendamment de la réalisation d'une boucle via le joncteur d'abonné (TS).

6. Dispositif selon la revendication 5, caractérisé en ce que, du côté de l'autocommutateur, des moyens supplémentaires de séparation (K1) sont prévus pour interrompre le chemin de courant vers le joncteur d'abonné (TS) tant que le chemin de courant passant par le poste d'abonné (TA) est interrompu et en ce que, du côté de l'autocommutateur, un circuit de détection de courant de sonnerie (RE) est prévu, qui reconnaît la présence d'un signal de courant de sonnerie et, en fonction de ce dernier, supprime ladite interruption, réalisant ainsi le passage du courant de sonnerie au poste d'abonné.